# EUROPEAN PATENT SPECIFICATION

(11) **EP 0 720 179 B1**
(45) Date of publication and mention of the grant of the patent: **07.11.2001**
(21) Application number: 95113927.8
(22) Date of filing: 05.09.1995
(51) Int. Cl.: H01B 7/28

(54) **Water-cutoff cable**
Wasserfester Kabel
Câble étanche

(30) Priority: 28.12.1994 JP 33864594
(43) Date of publication of application: 03.07.1996
(73) Proprietor: SUMITOMO WIRING SYSTEMS, LTD., Yokkaichi City Mie 510 (JP)
(72) Inventor: Yasukuni, Jun, c/o Sumitomo Wiring Systems, Ltd, Yokkaichi-City, Mie 510 (JP); Itoh, Takashi, c/o Sumitomo Wiring Systems, Ltd, Yokkaichi-City, Mie 510 (JP)
(74) Representative: Kuhnen & Wacker

(56) References cited:
- EP-A- 0 031 789
- EP-A- 0 261 000
- EP-A- 0 375 101
- DE-A- 1 490 621
- DE-A- 1 813 064
- DE-A- 4 417 143
- US-A- 4 703 132

## Description

The present invention relates to a water cutoff cable and, more particularly, relates to a design that allows protection against water permeation by the capillary phenomenon along a longitudinal direction from the end of the cable, and is, therefore, preferably used as a cable which constitutes a car wire harness to be particularly wired at various places where water permeation into the cable is apt to occur.

A cable equipped with core wires consisting of stranded wires is usually formed by coating an insulating coating onto the peripheral surface. of the core wires consisting the strands after stranding a plural set of conductive strands. With this kind of cable, since the core wires are formed by stranding conductive strands, a clearance does exist inevitably between stranded conductive strands. Therefore, when peeling off the insulating coating is made and the core wire is exposed, and if water dropping exists in the vicinity of the end of the cable connected between the core wire and a terminal, water permeates into the clearance between the strands by the capillary phenomenon, and then further permeates through the clearance in a longitudinal direction of the cable. As a result, there are problems of discoloring and corrosion of the conductive strands, and the water which has permeated into the opposite end of the cable terminal further permeates into the inside of the connector in which a terminal connected with a cable terminal is harnessed. The water permeated into the connector remains inside the connector, which may cause corrosion on the terminal inside the connector.

In solving the water permeating problem into the clearance between conductive strands in the above-mentioned cable, various propositions have so far been made.

For instance, in the manufacturing method of a water-proof cable according to JP-A-5-151848, after coating by filling a water-proof material in the clearance and on the periphery of stranded wires, an insulating separator tape which consists of a rubber to be coated on the periphery at a higher melting point than that of water-proof material is applied thereto in a longitudinal direction, and then the rubber and plastic insulators are covered thereon. With the water-proof cable, by covering with the rubber and plastic insulator after applying the separator in a longitudinal direction, the deformation that may be caused by ironing the surface of the water-proof material can be avoided at the time of coating with the insulator, thus assuring water-tightness and excellent appearance of the insulator.

In the water-proof cable treatment method according to JP-A-5-151848, by making a cable exposed conductive area having the insulating coating contact with a melting material of waterproof electric insulating organic materials which has a melting point of more than 50° C and viscosity of less than 200 centipoise, a filling layer is formed having the organic materials in the clearance between a conductor and an insulating coating.

Furthermore, with the manufacturing method of a water-proof cable according to JP-A-684416, by embedding the end of the cable which is first embedded in a water-proof insulating sealing agent, making a negative pressure by absorbing the air from the other end of the cable, and absorbing the shielding agent by means of negative pressure into the clearance of conductive strands, the shielding agent is filled in the clearance.

US-A-4,703,132 shows a multi-wire-conductor containing particles of water-swellable powder between conductor wires in order to block migration of water along the longitudinal direction of the cable.

EP-A-0 031 789 discloses an electrical cable containing a powder swelling upon contact with water, said powder being dispersed or diluted in a solvent and afterwards said solvent is sprayed onto the cable, followed by evaporation of the solvent.

EP-A-0 261 000 teaches the use of a water absorbing and swelling material inside the cable for preventing water from spreading thought the entire length of the cable.

First of all, with the manufacturing method of a water-proof cable according to JP-A-5-151848, although a water-proof material consisting of EVA, etc. is filled between the strands by pushing them through an extruder, it is nearly impossible to fill in a small clearance between the conductive strands without leak, because the water-proof material for an inner layer is extruded from the periphery after the cable is stranded. In addition, since preheating is applied after filling this water-proof material, the water-proof material is extruded to an outer layer from the extruder followed by extruding a separate tape from the extruder for wrapping around the peripheral surface of the outer layer waterproof material; that is, insulating coating is applied in this phase. This means that the process requires many process steps, the productivity is low, thereby leading to a higher cost. In addition, when making connection with terminals by peeling off the insulating coating for exposing core wires from the strand, there is a problem of not being able to peel easily because of the necessity for removing the separator tape, water-proof material for the outer layer, and water-proof material for the inner layer.

In addition, with the water-proof treatment method of JP-A-10614, as shown in Fig. 6, the exposed conductive area connected with a terminal is dipped in a fluid tank with an electrically insulating organic substance in a molten state. But, with this method, as the terminal surface is also coated with electrically insulating organic substance, it becomes necessary to provide a process again to remove the electrically insulating organic substance from the terminal surface.

Furthermore, with the manufacturing method of the waterproof cable according to JP-A-6-84416, whether the negative pressure introduced from the other end can certainly be introduced to the end embedded in the shielding agent through a small clearance of the strands is not certain; and absorbing the shielding agent into the clearance is not easy by means of the negative pressure at a position where clearances are not continuous. In addition, if it is after the filling by absorbing the shielding agent into the clearances by means of negative pressure, there exists a problem that the side to which the negative pressure is introduced first is unable to fill up with the shielding agent. That is, although the shielding agent can be filled between the strands at the one end of the cable, there is a problem that the shielding agent is not filled up between the strands on the other end.

As mentioned above, manufacturing methods for water-proof cable which have been presented so far have respective problems.

The present invention was provided in consideration of the above problem, and seeks for the permeated water through the clearance of stranded conductive strands can certainly be cut off, and the purpose of the present invention is to provide a water-cutoff cable without any problems that have been occurred in the conventional methods, especially that the shielding agent or water-swellable material makes does not hinder easy removal of the insulating layer or cover covering the core wire.

A water-cutoff cable according to the present invention is defined by claim 1.

Thus, according to the present invention, the highly water-absorptive resin powder is not existent at a position where the peripheral surface of the core wire is in contact with the outer insulating coating so that the insulating coating can be easily peeled of, thereby favourable facilitating contact with terminals at the ends of the cable. In order to gain access to the core wire, it is only the insulating layer which has to be removed and said removing operation must be as easy and time-saving as possible in order to have easy access to the core wire upon constituting a wire harness, the more as such wire harness preparation is carried out semi- or full automatically. Said easy access is made possible by the present invention, i.e. the feature of not providing the water-absorptive resin powder at the outside of the core member, but only between the single conductive strains and the inside of the core wire in order to make sure that the insulative coating can be peeled off easily.

According to the present invention, even when water permeates from the end of the cable, the permeated water is absorbed when it makes contact with the highly water-absorptive resin powder, and the resin powder is swelled by water-absorption, which clear away the clearance or shields the clearance. Therefore, both the features are achieved that taking away the clearances by water-absorption of the resin powder and by swelling of resin powder will cut off the water. In addition to known cables of this type or kind, the present invention allows easy access to the core wire, as the insulating coating can be stripped or peeled off easily.

As it is apparent from the description above, with the watercutoff cable as claimed in claim 1 of the present invention, a highly water-absorptive resin powder is attached to the peripheral surface of respective conductive strands which constitute a core wire consisting of stranded wires, and the highly water-absorptive resin powder is filled in the clearance if the clearance exists between the conductive strands. Therefore, even if permeation does occur at the end of the cable, water can be absorbed in the resin powder when water makes contact with the highly water-absorptive resin powder, and the water-absorbed resin powder swells and then removes the clearance or cuts off the clearance. Therefore, water permeation does not progress any more, water permeation along a longitudinal direction of cable and water permeation into connectors connected with the other end of terminal can certainly be avoided. Moreover, according to the present invention, the highly water-absorptive resin powder is not present between the peripheral surface of said core wire consisting of said plurality of conductive strands and the internal surface of said insulating coating, so that an easily peeling off of the insulating coating is possible, thereby favorable contact with terminals can be obtained.

### BRIEF DESCRIPTION OF THE DRAWINGS

Fig. 1 illustrates a perspective view of a water-cutoff cable.
Fig. 2 illustrates a sectional view of the cable of Fig. 1.
Fig. 3 illustrates a perspective view of a manufacturing apparatus of a water-cutoff cable.
Fig. 4 illustrates a perspective view of another water-cutoff cable.
Fig. 5 illustrates a sectional view of another embodiment of the water-cutoff cable according to the present invention.
Fig. 6 illustrates a manufacturing process of the conventional water-cutoff cable.

### DETAILED DESCRIPTION OF THE PREFERRED EMBODIMENTS

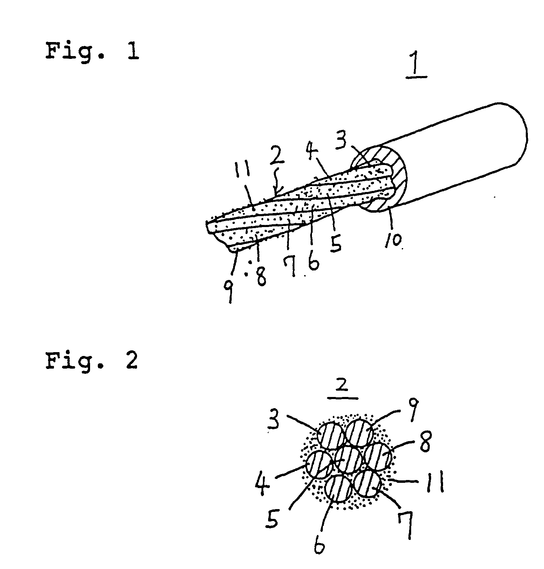

Fig. 1 and Fig. 2 illustrate a water-cutoff cable 1 wherein a core wire 2 consists of seven conductive strands 3 to 9, wherein an insulating coating 10 covers the peripheral surface of core wire 2 consisting of a stranded wire which strands these conductive strands 3 to 9. In this case, although the conductive strands are described as of seven wires, it is needless to say that the number of conductive strands is not limited here.

With the core wire 2 consisting of a stranded wire as mentioned above, a highly water absorptive resin powder 11 is attached to the respective peripheral surfaces of the respective conductive strands 3 to 9, and also the highly water-absorptive resin powder 11 is filled in the clearance of the conductive strands 3 to 9.

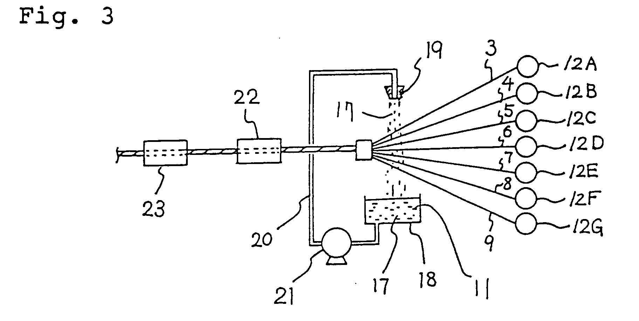

The water-cutoff cable 1 illustrated in Fig. 1 and Fig. 2 as above-mentioned is manufactured by the manufacturing facility as schematically shown in Fig. 3. That is, a solution injection apparatus is installed on the way of a travelling route for leading the conductive strands 3 to 7, starting from the unwinding of a plural set (7 sets) of conductive strand unwinding rolls 12A to 12G to stranding dies.

The above-mentioned solution injection apparatus is equipped with a fluid tank 18 which reserves a solution 17 dispersed after mixing the highly water-absorptive powder 11 with a solvent at a lower part of the travelling route. An injection nozzle 19 is provided on the upper position opposite to the fluid tank 18 above and across the travelling route. A solution travelling pipe 20 is installed between the fluid tank 18 and nozzle 19, and the solution 17 is circulated from the fluid tank 18 to the nozzle 19 by installing a pump 21 onto the solution travelling pipe 20.

By spraying solution 17 injected from the above-mentioned nozzle 19 to the travelling conductive strands 3 to 9, the solution 17 is coated on the peripheral surface of these conductive strands 3 to 9, while the fallen solution is collected into the lower fluid tank 18.

By means of the above-mentioned solution injection apparatus, the conductive strands 3 to 9 of which peripheral surface is coated with the solution 17 is stranded through stranding dies, and then discharged from the stranding dies after stranding. In this stranding process, the solution coated peripheral surfaces of the conductive strands 3 to 9 are roughly adherent, coming to a condition filled with the solution into the clearance if there is any clearance.

The stranded wire conducted from the stranding dies at the above-mentioned condition, goes through the inner area of drying apparatus 22 to which hot air is supplied, where the wire is rapidly dried by heating at a predetermined temperature and then the solvent such as toluene or the like is evaporated therein. Therefore, only the highly water-absorptive resin powder 11 alone remains on the peripheral surface or in the clearance of the respective conductive strands 3 to 9.

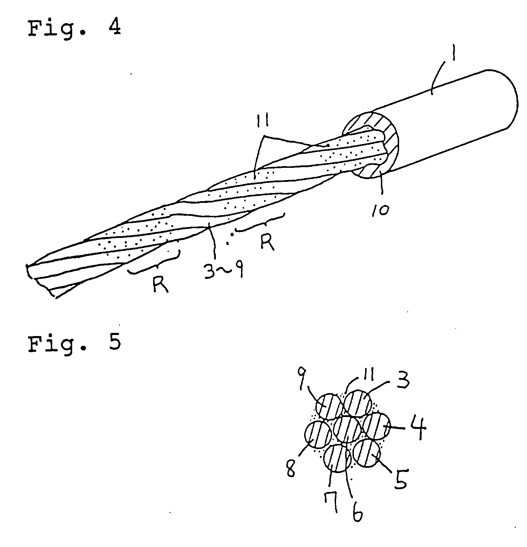

In this case, carrying out the injection of solution from the solution injection apparatus 15 intermittently at certain intervals, as shown in Fig. 4, the highly water-absorptive resin powder 11 is attached to the peripheral surface of conductive strands 3 to 9 and a water-cutoff region R filled in the clearance of the conductive strands may be provided at certain intervals in a longitudinal direction of the cable.

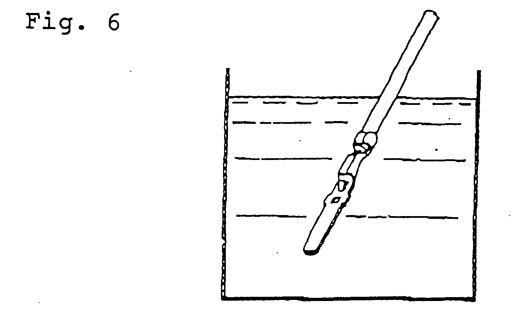

With the cable manufacturing apparatus, an apparatus for removing the highly water-absorptive resin powder 11 attached to the peripheral surface of the core wire 2 is installed between the above-mentioned drying apparatus 22 and the insulating coating extruder 23. This apparatus is, for instance, consisting of an apparatus for pressing an adhesive tape against the peripheral surface of the core wire, where the adhesive surface of the adhesive tape can, using its adherence, remove the highly water-absorptive resin powder on the peripheral surface of the conductive strands. Or, injected air can blow off and remove the highly water-absorptive powder attached to the peripheral surface. Thus, between the peripheral surface of the core wires consisting of the above-mentioned conductive strands and the inner surface of the insulating coating covering the core wire, the above-mentioned highly water-absorptive resin powder will not be existed and as illustrated in Fig. 5, this results to a water-cutoff cable 1 of which the highly water-absorptive resin powder 11 located on the peripheral surface of the core wire 2 was removed and thus one can peel off easily the insulating coating 10 from the core wire 2 when peeling the insulating coating 10, and also allows easy crimping connection between the peeled and exposed core wire 2 and the crimping terminal (not illustrated here).

As solvent to disperse the resin powder by mixing with the highly water-absorptive resin powder, toluene and the like are preferably used. Supply of the solution can be acceptable for any supply mode, injection of solution to conductive strands, dipping supplied drop by drop, and flowing down that flows continuously without applying pressure.

As above-mentioned highly absorptive water resin powder, starch-acrylic acid graft copolymer, poly acrylic acid chloride, and gelatinized vinylacetate-acrylic ester graft copolymer are preferably used. In addition, these highly water-absorptive resin powders are used in a range of 1 µm to 50 µm, preferably 5 µm to 10 µm. In this case, if the powder is less than 5 µm, the powder becomes coalesced and thus is apt to become coarse, while if the powder is more than 10 µm in size it becomes difficult to attach it to the conductive wires.

## Claims

1. A water-cutoff cable coated with an insulating coating (10) around the periphery of a core wire (2) being formed by stranding a plurality of conductive strands (3 to 9), wherein
the peripheral surfaces of and a clearance between the respective conductive strands (3 to 9) stranded as mentioned above are covered and filled with a highly water-absorptive resin powder (11), said highly water-absorptive resin powder (11) being structured to swell upon contact with water in order to cut off permeation of water in longitudinal direction of said water-cutoff cable (1) when said water permeates from an end of said water-cutoff cable (1), and said resin powder is not present between the peripheral surface of said core wire and the internal surface of said insulating coating (10) in contact therewith,
**characterized in that**
said highly water-absorptive resin powder (11) is the only material present on the peripheral surfaces of said conductive strands (3 to 9) and within the clearance therebetween.

2. The water-cutoff cable of claim 1, wherein said highly water-absorptive resin powder (11) is selected from starch-acrylic acid graft copolymer, polyacrylic acid chloride, and gelatinised vinylacetate-acrylic ester graft copolymer.

3. The water-cutoff cable of any one of claims 1 and 2 wherein said highly water-absorptive resin powder (11) has a particle size in the range of from 1 to 50 µm, particularly 5 to 10 µm.

## Patentansprüche

1. Wasserabsperrend wirkendes Kabel, beschichtet mit einer isolierenden Ummantelung (10) um die Außenfläche eines Kerndrahts (2), das gebildet wird, indem man aus mehreren Leitungsdrähten (3 bis 9) einen Strang formt, wobei die Außenflächen der jeweiligen Leitungsdrähte (3 bis 9), die wie vorstehend angegeben zu einem Strang geformt sind, und die Abstände zwischen ihnen mit einem hochabsorbierenden Harzpulver (11) überzogen bzw. gefüllt sind, wobei das hochabsorbierende Harzpulver (11) so ausgelegt ist, daß es bei Wasserkontakt aufquillt, um so das Eindringen von Wasser in Längsrichtung dieses wasserabsperrend wirkenden Kabels (1) zu verhindern, wenn das Wasser von einem Ende des wasserabsperrend wirkenden Kabels (1) eindringt, und wobei dieses Harzpulver sich nicht zwischen der Außenfläche des Kerndrahts und der Innenfläche der isolierenden Ummantelung (10), mit der sie in Berührung steht, befindet,
**dadurch gekennzeichnet, daß**
es sich bei dem stark wasserabsorbierenden Harzpulver (11) um das einzige Material handelt, das auf den äußeren Oberflächen der Leitungsdrähte (3 bis 9) und in ihren Zwischenräumen vorhanden ist.

2. Wasserabsperrend wirkendes Kabel nach Anspruch 1, wobei das stark wasserabsorbierende Harzpulver ausgewählt ist aus Stärke/Acrylsäure-Pfropfcopolymer, Polyacrylsäurechlorid und gelatinisiertem Vinylacetat/Acrylester-Propfcopolymer.

3. Wasserabsperrend wirkendes Kabel nach einem der Ansprüche 1 und 2, wobei das stark wasserabsorbierende Harzpulver (11) eine Teilchengröße im Bereich von 1 bis 50 µm, insbesondere von 5 bis 10 µm, aufweist.

## Revendications

1. Câble hydrofuge revêtu avec un revêtement isolant (10) autour de la périphérie d'une âme (2) constituée par tressage d'une pluralité de torons conducteurs (3 à 9), dans lequel les surfaces périphériques des torons conducteurs respectifs (3 à 9) tressés comme indiqué ci-dessus sont revêtues, et un vide entre ceux-ci est rempli, avec une poudre de résine à fort pouvoir d'absorption d'eau (11), la dite poudre de résine à fort pouvoir d'absorption d'eau (11)étant structurée pour gonfler au contact de l'eau afin d'arrêter l'infiltration d'eau dans la direction longitudinale du dit câble hydrofuge (1) lorsque la dite eau s'infiltre à partir d'une extrémité du dit câble hydrofuge (1), et il n'y a pas de dite poudre de résine entre la surface périphérique de la dite âme et la surface intérieure du dit revêtement isolant (10) en contact avec l'âme,
**caractérisé en ce que** la dite poudre de résine à fort pouvoir d'absorption d'eau (11) est la seule matière présente sur les surfaces périphériques des dits torons conducteurs (3 à 9) et dans les vides entre ceux-ci.

2. Câble hydrofuge selon la revendication 1, dans lequel la dite poudre de résine à fort pouvoir d'absorption d'eau (11) est choisie parmi un copolymère greffé d'amidon-acide acrylique, un poly-chlorure d'acide acrylique, et un copolymère greffé d'acétate de vinyle-ester acrylique en gel.

3. Câble hydrofuge selon une quelconque des revendications 1 et 2, dans lequel la dite poudre de résine à fort pouvoir d'absorption d'eau (11) a une dimension de particule comprise entre 1 et 50 µm, et en particulier entre 5 et 10 µm.
